# EUROPEAN PATENT APPLICATION

(11) **EP 4 841 517 A1**
(43) Date of publication of application: **18.11.2026**
(21) Application number: 25176678.8
(22) Date of filing: 15.05.2025
(51) Int. Cl.: G06N 5/02, G06N 10/60, G06Q 30/0601

(54) **QUANTUM MERCHANT RECOMMENDATION SYSTEM AND METHOD**

(71) Applicant: Mastercard International, Inc., Purchase, NY 10577 (US)
(72) Inventor: DE OLIVEIRA CHAGAS, Bruno, Dublin (IE); CONWAY, James, Dublin (IE); HUGHES, Keith, Wicklow (IE); MUHAMMAD, Rahmana, Bloomfield, Connecticut (US)
(74) Representative: Murgitroyd & Company

(57) **Abstract**

A method 300 at a classical computer comprises: receiving a representation of a real-world network 304; defining an optimisation problem based on the representation of the network 306; submitting the optimisation problem to a quantum computer such that the quantum computer is able to solve the optimisation problem 308; obtaining from the quantum computer a solution to the optimisation problem 310, wherein the solution comprises one or more updated weights; identifying one or more new links between the nodes based on the one or more updated weights 312; and generating one or more recommendations based on the one or more new links 314. The representation of the real-world network comprises a plurality of nodes connected via one or more links. Each node represents a real-world entity and each link has an initial weight. The optimisation problem is subject to one or more constraints.

## Description

### FIELD OF THE INVENTION

The present disclosure relates to quantum computing and information processing. The present disclosure more particularly relates to methods, systems, and tools which use quantum computing techniques for identifying new links between entities and generating one or more recommendations based on the identified one or more new links. The present disclosure may find particular use in offer recommendation systems.

### BACKGROUND TO THE INVENTION

In various domains such as social networking, finance, and logistics, discovering new connections between entities is crucial for enhancing insights and decision-making. Traditional link prediction methods are typically based on classical algorithms that analyse historical interactions to estimate the probability of future links. These methods often use statistical techniques or machine learning models to predict the likelihood of connections. While these methods can effectively predict links in smaller networks, they often face significant challenges in scalability and efficiency when applied to larger, more complex datasets. Prior art link prediction-based recommendation systems often encounter scalability challenges with the growing size of datasets. Current methods may not provide the computational power required to process extensive data across large networks, leading to suboptimal performance in identifying new connections in real-world networks. Additionally, prior art methodologies can inadvertently introduce bias and reinforce user bubbles, limiting diversity and effectiveness of recommendations.

The present disclosure has been devised to mitigate or overcome at least some of the above-mentioned problems.

### SUMMARY OF THE DISCLOSURE

In accordance with an aspect of the present disclosure, there is provided a method for identifying one or more new links between entities and generating one or more recommendations based on the identified one or more new links, the method comprising: receiving, at a classical computer, a representation of a real-world network, wherein the representation of the real-world network comprises a plurality of nodes connected via one or more links, wherein each node represents a real-world entity and wherein each link has an initial weight; defining, by the classical computer, an optimisation problem based on the representation of the network, wherein the optimisation problem is subject to one or more constraints; submitting, by the classical computer, the optimisation problem to a quantum computer such that the quantum computer is able to solve the optimisation problem; obtaining, by the classical computer from the quantum computer, a solution to the optimisation problem, wherein the solution comprises one or more updated weights; identifying, by the classical computer, one or more new links between the nodes based on the one or more updated weights; and generating, by the classical computer, one or more recommendations based on the one or more new links. Advantageously, this method enables more accurate and efficient discovery of previously unidentified connections within complex networks, enhancing recommendation processes.

In some embodiments, the quantum computer is a quantum annealer. Advantageously, the use of a quantum annealer allows for rapid convergence on optimal solutions, improving computational efficiency for large-scale problems.

In some embodiments, the method further comprises: solving, by the quantum computer, the optimisation problem.

In some embodiments, defining the optimisation problem comprises: generating, by the classical computer, an adjacency matrix; formulating, by the classical computer, an objective optimisation problem based on the adjacency matrix.

In some embodiments, defining the optimisation problem comprises: converting, by the classical computer, the objective optimisation problem into a QUBO formulation. Advantageously, defining the optimisation problem in this way translates complex network relationships into a format solvable by quantum systems, ensuring compatibility and efficiency.

In some embodiments, defining the optimisation problem comprises: translating, by the classical computer, binary variables of the QUBO formulation into continuous variables.

In some embodiments, defining the optimisation problem comprises: adding, by the classical computer, one or more constraints to the optimisation problem. Advantageously, adding constraints ensures that the solution adheres to real-world limitations.

In some embodiments, the one or more constraints include one or more of: network structure constraints; link prevention constraints; link quantity constraints; and exclusivity constraints. Advantageously, these constraints refine the optimization process, leading to solutions that are not only accurate but also recommendations that are practically implementable.

In some embodiments, the real-world network is a tripartite network.

In some embodiments, each node represents a cardholder, a merchant or an offer. Advantageously, the method enables targeted analysis and recommendation generation tailored to the needs of each entity type.

In some embodiments, the representation of the real-world network comprises at least one cardholder node, at least one merchant node and at least one offer node.

In some embodiments, each cardholder node is connected to at least one merchant node via a propensity link, and each merchant node is connected to at least one offer node via a value link. Advantageously, this structure supports precise modelling of transactional relationships, leading to more accurate predictions and recommendations.

In some embodiments, the method further comprises: sending, by the classical computer, the one or more recommendations to a user device or server associated with at least one cardholder and/or at least one merchant. Advantageously, the sending of recommendations in this manner ensures timely delivery of insights to end-users, facilitating immediate actionable decisions.

In accordance with another aspect of the present disclosure, there is provided a system for identifying one or more new links between entities, the system comprising: a classical computer. Advantageously, the system provides a reliable platform for data processing and initial problem formulation, ensuring robust groundwork for subsequent quantum computations.

In some embodiments, the system further comprises: a quantum computer configured for solving the optimisation problem. Advantageously, the inclusion of a quantum computer in the system empowers the system with advanced computational capabilities, drastically reducing solution times for complex problems.

In some embodiments, the quantum computer is an adiabatic quantum computer. Advantageously, adiabatic quantum computers are particularly suited for optimization tasks, offering improved performance in reaching ground state solutions for the formulated problems.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

One or more embodiments of the disclosure will now be described, by way of example only, with reference to the accompanying drawings, in which:
Figure 1 shows an example computer system for implementing aspects of the present invention;
Figure 2 shows a network environment for implementing aspects of the present invention;
Figure 3 shows a method according to an aspect of the invention;
Figure 4 shows a schematic representation of an example network;
Figure 5 shows a method for use in aspects of the present invention; and
Figure 6 shows a schematic representation of a further example network.

Note that the drawings are schematic and accompany the description, illustrating preferred and exemplary embodiments and not necessarily being drawn to scale.

### DETAILED DESCRIPTION

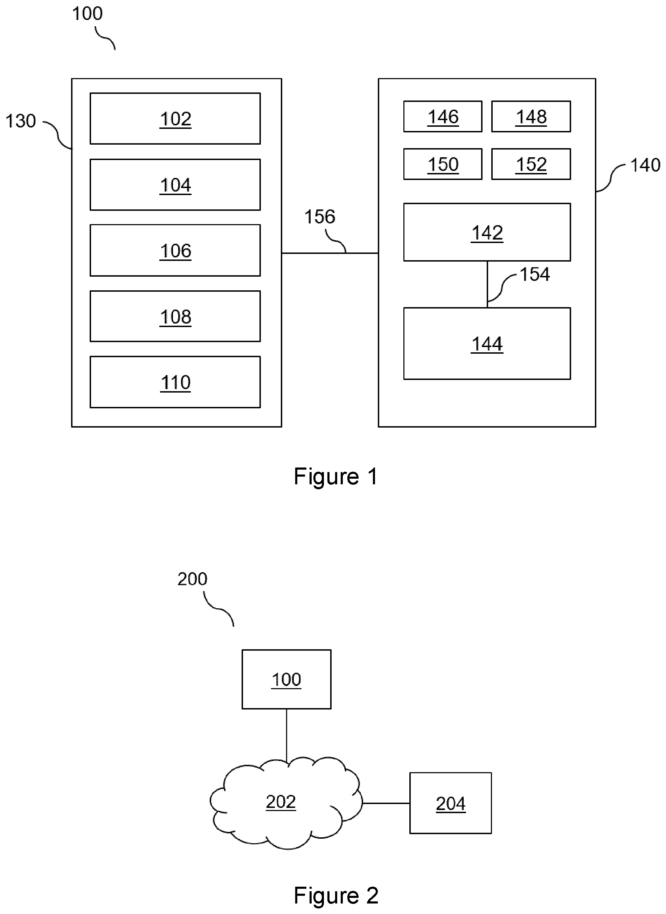

Figure 1 shows an example computing system 100 for implementing the present invention. One or more such computer systems 100 are arranged to perform or execute one or more steps of the methods described herein. In particular, software running on one or more computer systems 100 perform one or more steps of the methods described herein.

The computing system 100 comprises a classical computer 130 coupled to a quantum computer 140 via an interface 156.

The classical computer 130 comprises a processing element 102, a memory unit 104, an input/output (I/O) interface 106, a communications interface 108, and a bus 110. Whilst Figure 1 illustrates a classical computer 130 having particular components and in a particular arrangement, it can be envisaged that the classical computer 130 comprises any suitable number of components in any suitable arrangement of components. The classical computer 130 may further comprise additional classical computing elements as known in the art.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g., one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units. The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory. The one or more secondary memory units comprise memory, i.e., computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory. The memory stores software comprising a respective instance of at least one client application arranged to run on the processing element 102 for carrying out various steps of the methods disclosed herein. The client application may be initially provided to the classical computer 130 on suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the classical computer 130 and one or more computer devices arranged to facilitate communication between a user and the classical computer 130. For example, the one or more computer devices may include, but is not limited to including, a display device, a keyboard, a speaker, a printer, any other suitable device, or any combination of devices thereof.

The communication interface 108 facilitates communication between the classical computer 130 and any other one or more computer systems and/or one or more networks. The communication interface 108 may comprise a network interface controller, network adapter, wireless NIC, or wireless adapter for communicating with a network.

The quantum computer 140 comprises a quantum computing unit 142 and a quantum memory unit 144, a plurality of coupling devices 146, a bias device 148, and a state determination device 150. The quantum computing unit 142 comprises a number N of qubits 152. The qubits 152 may be for example, superconducting flux devices 152 having a circulating current. For example, the superconducting flux devices 152 may comprise a loop of superconducting material interrupted by at least one Josephson junction, as is known in the art. Further qubit implementations may be envisaged. The quantum computing unit 142 is configured to provide data to, and receive data from, the quantum memory unit 144 by means of a memory interface 154. A "state" of the quantum computing unit 142 corresponds to the respective state of all of the N qubits 152. An example state of a qubit is a 0 state.

The 0 state may correspond to, for example, a clockwise current around the superconducting flux devices 152 which may induce a downward magnetic field. A counterclockwise current around the superconducting flux devices may induce an upwards magnetic field which references a state 1. The state of the quantum computing unit 142 may be described by a bit string having a length N. Thus, there are 2^{N} possible configurations for the state of the quantum computing unit 142. The quantum computer 140 is preferably suitable for implementing quantum circuits. Other quantum computing models may be envisaged.

Figure 2 shows an example network environment for facilitating implementation of the present invention.

The classical computer 130 of the computing system 100 may communicate with any network, such as a network 202, via the communication interface 108. The network 202 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 202 may be envisaged. The network 202 can facilitate communication between the classical computer 130 and one or more third party computer systems 204. It will be appreciated that the classical computer 130 and the third party computer systems 204 may be connected to each other directly, such that the network 202 is not needed.

Third party computing system 204 may be a network addressable computing system. Third party computing system 204 may generate, store, receive, and transmit data, such as, for example, one or more recommendations, as will be discussed further herein. Communication with the third party computing system 204 may comprise the use of one or more application programming interfaces (APIs). One or more third party computing systems 204 may be present, and each of the one or more third party computing systems 204 may be associated with a respective third party.

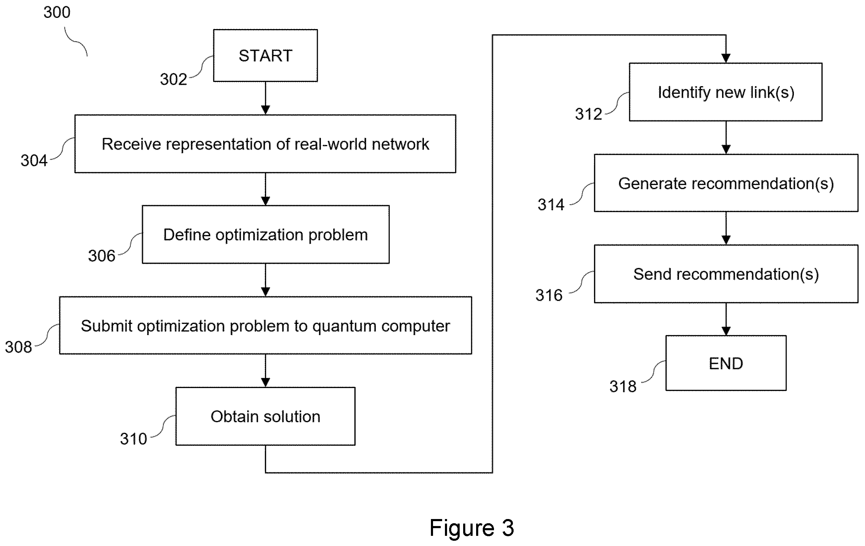

Figure 3 shows a flow diagram of a method 300 for identifying one or more new links between entities and generating one or more recommendations based on the identified one or more new links, in accordance with an aspect of the present disclosure. The method 300 may be carried out at least in part at a classical computer, such as the classical computer 130 of the example computing system 100 shown in figure 1.

The method 300 begins at step 302 and proceeds to step 304.

At step 304 the method 300 comprises receiving a representation of a real-world network. The classical computer 130 of the example computing system 100 may receive the representation of a real-world network, for example from third party computing system 204 via network 202.

The real-world network corresponding to the representation received in step 304 comprises a plurality of real-world entities having links between them. For example, the real-world entities may include cardholders, merchants and offers. The cardholders may be linked to merchants by consumer transactions i.e. transactions in which a cardholder purchases a product from the merchant. The merchants may be linked to offers by the ability of the merchant to provide the offer. An offer may be a product or service which can be provided by a merchant to a cardholder.

The real-world network may be represented in any suitable manner. For example, the real-world network may be represented by a graph, matrix or one or more tables. In examples, the representation of the real-world network comprises a plurality of nodes connected to each other via one or more links. Each node represents a real-world entity in the real-world network. Each link represents a connection between two nodes. Each link has an initial weight, the initial weight being a value between 0 and 1 and representing the strength of connection between two nodes.

In examples, the real-world network is a tripartite network comprising one or more cardholder nodes, one or more merchant nodes and one or more offer nodes. Each offer node may be a product node or a service node. Cardholders and merchants are connected through their transactions, and the strength of this connection is referred to as the propensity score which is a value between 0 and 1. A propensity score indicates how likely a cardholder is to make a purchase from a particular merchant. Another link exists between merchants and offers, where the strength is called the value score, a value between 0 and 1. The value score reflects how valuable a product is to a merchant, considering factors such as its value, stock levels, and sales performance.

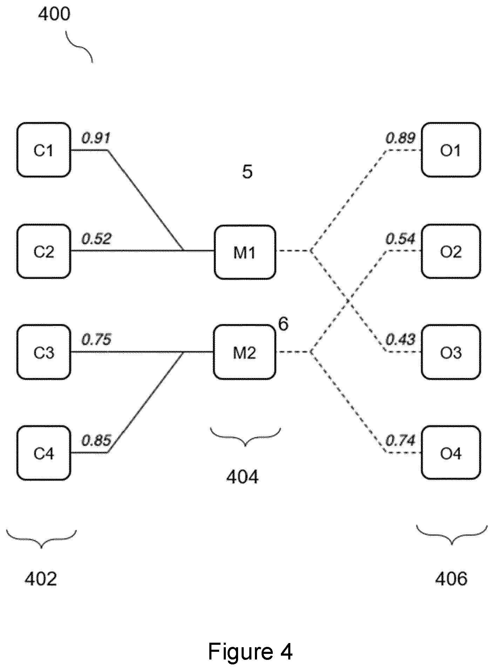

Figure 4 shows an example representation 400 of a real-world network. The example representation 400 may be received by the classical computer 130 at step 304. Each node in the representation 400 corresponds to a cardholder, a merchant or an offer (product or service) of the real-world network. In this example, the representation 400 of the real-world network comprises four cardholder nodes 402 (C1-C4), two merchant nodes 404 (M1-M2) and four offer nodes 406 (O1-O4). Each cardholder node 402 is connected to one merchant node 404 via a propensity link and each offer node is connected to one merchant node via a value link.

For the network shown in figure 4, the links between nodes are represented with values and scores. For example, cardholder C1 is connected to merchant M1 with a score of 0.91, while this cardholder C1 is not connected to merchant M2. On the other hand, merchant M2 is connected to offers O2 and O4, with value scores of 0.54 and 0.74, respectively. As will be appreciated, the representation received at step 304 may have other numbers of cardholder nodes, merchant nodes and/or offer nodes, and each cardholder node and each offer node may be connected to different numbers of merchant nodes via propensity/value links.

Another way to represent a real-world network is via one or more tables that represent the network with pairs of entries and corresponding values. For example, cardholder C4 is connected to merchant M2 with a score of 0.84, as seen in the fourth entry of this first table:

**Table 1: Links between cardholders and merchants**

| **Cardholder ID** | **Merchant ID** | **Propensity Score** |
|---|---|---|
| C1 | M1 | *0.91* |
| C2 | M1 | *0.52* |
| C3 | M2 | *0.75* |
| C4 | M2 | *0.85* |

**Table 2: Links between offers and merchants**

| **Offer ID** | **Merchant ID** | **Value Score** |
|---|---|---|
| O1 | M1 | *0.89* |
| O2 | M2 | *0.54* |
| O3 | M1 | *0.43* |
| O4 | M2 | *0.74* |

The representation of the real-world network may be received at step 304 in any suitable format, for example as a graph (see e.g. figure 4), as a set of tables (see e.g. Tables 1 and 2) or in the form of a suitable matrix.

Returning to figure 3, at step 306 the method 300 comprises defining an optimisation problem based on the representation of the network. As is explained in further detail below, in examples the Quadratic Unconstrained Binary Optimization (QUBO) framework is used to define an optimisation problem that can be solved using quantum computing techniques. QUBO is a mathematical formulation for combinatorial optimisation problems. QUBO is directly related to the physical model behind quantum annealers, so by expressing a problem in terms of QUBO, quantum dynamics may be exploited to obtain an optimised solution to the problem.

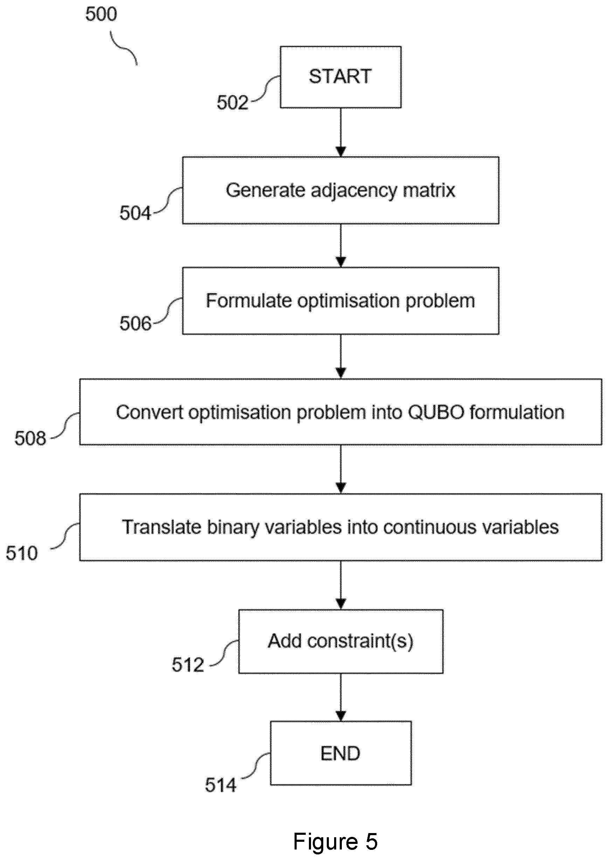

Figure 5 shows a flow diagram of a method 500 for defining an optimisation problem based on a representation of a network. The method 500 may be carried out at a classical computer, such as the classical computer 130 of the example computing system 100 shown in figure 1. The method 500 may be carried out during step 306 of the method 300. In other words, the method 500 may be used to implement step 306 of the method 300.

The method 500 begins at step 502 and proceeds to step 504.

At step 504 the method 500 comprises generating an adjacency matrix. In particular, step 504 comprises generating a weighted adjacency matrix based on the representation received in step 302.

In examples, at step 504 the representation of the real-world network is converted to a weighted adjacency matrix, with entries corresponding to the existing links in the given network and their respective weights. For example, the weighted adjacency matrix *A* corresponding to the example representation 400 is: $A = \left[\begin{matrix}0 & 0 & 0 & 0 & 0.91 & 0 & 0 & 0 & 0 & 0 \\ 0 & 0 & 0 & 0 & 0.52 & 0 & 0 & 0 & 0 & 0 \\ 0 & 0 & 0 & 0 & 0 & 0.75 & 0 & 0 & 0 & 0 \\ 0 & 0 & 0 & 0 & 0 & 0.85 & 0 & 0 & 0 & 0 \\ 0.91 & 0.52 & 0 & 0 & 0 & 0 & 0.89 & 0 & 0.43 & 0 \\ 0 & 0 & 0.75 & 0.85 & 0 & 0 & 0 & 0.54 & 0 & 0.74 \\ 0 & 0 & 0 & 0 & 0.89 & 0 & 0 & 0 & 0 & 0 \\ 0 & 0 & 0 & 0 & 0 & 0.54 & 0 & 0 & 0 & 0 \\ 0 & 0 & 0 & 0 & 0.43 & 0 & 0 & 0 & 0 & 0 \\ 0 & 0 & 0 & 0 & 0 & 0.74 & 0 & 0 & 0 & 0\end{matrix}\right]$

In the example of weighted adjacency matrix *A*, rows/columns 1-4 correspond to cardholder nodes C1-C4, rows/columns 5-6 correspond to merchant nodes M1-M2 and rows/columns 7-10 correspond to offer nodes O1-O4. Once generated, the adjacency matrix may be stored in the classical memory of computer system 100.

At step 506 the method 500 comprises formulating an objective optimisation problem based on the adjacency matrix. For example, the optimization problem based on weighted adjacency matrix *A* may be expressed as: ${min}_{Z} α \left‖A-AZ\right‖ + \left‖Z\right‖$ **where** *AZ =S* is may be referred to as the score matrix or similarity matrix and quantifies the likelihood of there being a link between two nodes, and *α* is a free parameter. Therefore, matrix S represents the link prediction scores derived from variable Z, which is to be minimised. Similar to a ridge regression problem, this strictly convex function ensures an optimal solution.

At step 508 the method 500 comprises converting the objective optimisation problem into a QUBO formulation. As noted above, the QUBO framework may be used to express a real-world problem as an energy function which can be provided to a quantum computer. The variables identified in relation to the real-world problem are mapped to the variables of the QUBO energy function. The QUBO energy function may be thought of as a matrix wherein each value in the matrix expresses the relationship between two different qubits in the quantum computer. Once the energy function has been input to the quantum computer, the physical properties of the quantum computer will cause the function to resolve to a minimum value landscape which may be output as an optimisation of the result.

In the context of annealing problems, our approach involves employing the norm as the trace of a matrix. The norm is defined by the equation below as the trace of the multiplication of a matrix by its transpose, sometimes called the Frobenius norm: ${\left‖X\right‖}^{2} = tr {X}^{T} X$ where X is a generic matrix, to express the formulation as a QUBO problem, a language commonly used in quantum annealing problems. According to examples of the present disclosure, the norm is used in the optimization problem for example when ∥*A* - *AZ*∥ is calculated.

At step 510 the method 500 comprises translating, by the classical computer, binary variables of the QUBO formulation into continuous variables. Since QUBO problems deal with binary variables, the binary variables must be translated into continuous variables. The transformation is expressed as ${z}_{ij} = c {\sum }_{p = 0}^{1} {\sum }_{k = 0}^{M - 1} {\left(-1\right)}^{p} {2}^{k} {q}_{kij}$ where *zᵢⱼ* represents the entries of *Z, c* is a scaling factor and *M* represents the level of discretization of the prediction values. For example, with M equal to 5, we have scores of 0.00, 0.25, 0.50, 0.75, and 1.00. The values of *p* and *q* are indices of the summation, where p assigns positive and negative values, and *q* performs the discretization up to M. The first summation accounts for the signal of positive or negative numbers, and k determines the granularity of the representation.

At step 512 the method 500 comprises adding one or more constraints to the optimisation problem. The one or more constraints may comprise network structure constraints, link prevention constraints, link quantity constraints configured and/or exclusivity constraints. The constraints may be expressed as energy penalty terms in the QUBO formulation of the optimization problem.

Link prevention constraints are configured for preventing links being made between particular nodes. For example, if a product is not intended to be sold by a merchant, the connection can be forced to be null by a link prevention constraint.

Network structure constraints are constraints configured for restricting the possible structures taken by the network. For example, a network structure constraint may restrict the network to be tripartite in order to prevent direct connections between cardholders and products, allowing connections only via merchants. This approach ensures better control over the network's connections.

Link quantity constraints are constraints configured for restricting the number of links that can be made between particular nodes. For example, a link quantity constraint may impose a maximum number of connections between cardholders and merchants, merchants and products, as well as cardholders and products. By imposing such a constraint, it can be ensured that there is no excessive concentration of links at a single point in the network.

Additionally or alternatively, a link quantity constraint may restrict a minimum number of products per merchant, preventing merchants from being e.g. single-product sellers.

Exclusivity constraints can be used to control whether certain products are exclusive to each other within a specific merchant. By doing so, it is possible to avoid conflicts between merchants and products.

After steps 502-512 have been completed, the method 500 proceeds to step 514 where the method 500 ends. At this point, the objective optimisation problem has been converted into a QUBO formulation suitable for solving by a quantum computer, for example a quantum annealer.

Returning to method 300 shown in figure 3, at step 308 the method 300 comprises submitting, by the classical computer, the optimisation problem (expressed as a QUBO formulation) to a quantum computer such that the quantum computer is able to solve the optimisation problem. In examples, at step 308 the quantum computer 140 of computer system 100 receives the optimisation problem from classical computer 130. The quantum computer (e.g. quantum computer 140) is then used to solve the optimisation problem. In examples, the quantum computer is a quantum annealer. Once complete, the quantum computer may send the solution to the classical computer, either automatically on completion of the calculation or in response to a command or message received from the classical computer.

At step 310 the method 300 comprises obtaining, by the classical computer (e.g. classical computer 130) from the quantum computer (e.g. quantum computer 140), the solution to the optimisation problem, wherein the solution comprises one or more updated weights. Particularly, the solution to the optimisation problem is an updated weighted adjacency matrix, with the updated weights therein representing the strengths of links between respective nodes as calculated by the quantum computer. The updated weighted adjacency matrix may be an upper triangular matrix.

At step 312 the method 300 comprises identifying, by the classical computer, one or more new links between the nodes based on the one or more updated weights. For example, new links may be identified by identifying the largest weights in the updated weighted adjacency matrix or identifying all weights in the updated weighted adjacency matrix which meet a threshold value. Where an updated weight is large and/or is greater than a threshold, then a new link may be identified between the two nodes corresponding to that weight.

At step 314 the method 300 comprises generating, by the classical computer, one or more recommendations based on the one or more new links. For example, where a new link is identified between a cardholder and a merchant (and e.g. no link was present in the representation of the network received in step 304), a recommendation may be for that cardholder to use that merchant, or for that merchant to advertise to that cardholder.

At optional step 316 the method 300 comprises sending, by the classical computer, the one or more recommendations to a user device associated with at least one cardholder and/or at least one merchant. For example, a message suggesting that a cardholder uses a particular merchant may be sent to a user device (e.g. a smart phone) associated with that cardholder. Alternatively, a message suggesting that a merchant advertises to a particular cardholder may be sent to a server or other device associated with that merchant.

The method 300 proceeds to step 318 where the method 300 ends.

As will be appreciated, the example computing system 100 depicted in figures 1 and 2 can be used for implementing the present techniques, including the example methods 300 and 500 described above. The example computing system 100 is a system for identifying one or more new links between entities. The example computing system 100 comprises: a classical computer 130 configured for carrying out the methods 300, 500; and a quantum computer 140 configured for solving the optimisation problem formulated using methods 300, 500.

An objective of the methods presently disclosed is to find, through a quantum algorithm, new links between cardholders and merchants, merchants and products, as well as cardholders and products. With these new links, more suitable products can be recommended to cardholders, new products can be proposed to merchants, and new markets/merchants can be introduced to cardholders. This approach diversifies shopping behaviours and maximises revenue for markets/merchants, all while processing large amount of data. The present methods can be incorporated into Personalized Card-Linked Offer (PCLO) systems. PCLO systems operate by targeting cardholders based on transaction history. The cardholders are scored based on their likelihood of redeeming an offer. Multiple offers may then be assigned to the card holder based a set of constraints.

### Example implementation using real data

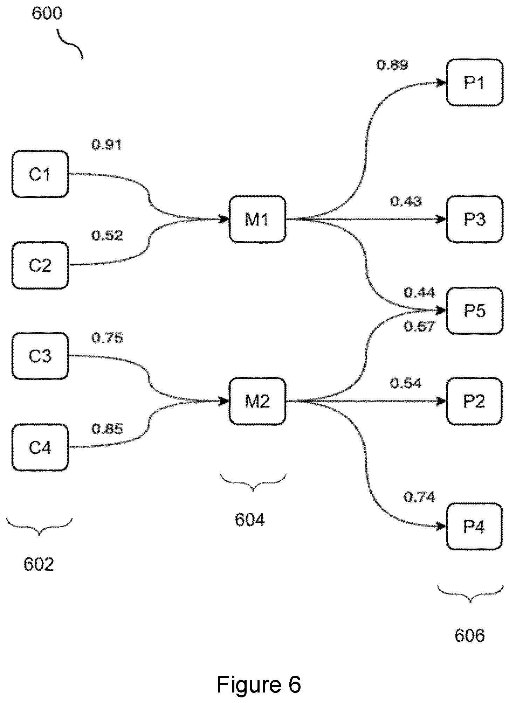

The following example is based on the example representation 600 of a network shown in Figure 6.

At step 304, the example representation 600 is received by a classical computer and at step 306, an optimisation problem is defined according to the method 500. Defining the optimisation problem at step 306 comprises generating an adjacency matrix *A*: $A = \left[\begin{matrix}0 & 0 & 0 & 0 & 0.91 & 0 & 0 & 0 & 0 & 0 & 0 \\ 0 & 0 & 0 & 0 & 0.52 & 0 & 0 & 0 & 0 & 0 & 0 \\ 0 & 0 & 0 & 0 & 0 & 0.75 & 0 & 0 & 0 & 0 & 0 \\ 0 & 0 & 0 & 0 & 0 & 0.85 & 0 & 0 & 0 & 0 & 0 \\ 0.91 & 0.52 & 0 & 0 & 0 & 0 & 0.89 & 0 & 0.43 & 0 & 0.44 \\ 0 & 0 & 0.75 & 0.85 & 0 & 0 & 0 & 0.54 & 0 & 0.74 & 0.67 \\ 0 & 0 & 0 & 0 & 0.89 & 0 & 0 & 0 & 0 & 0 & 0 \\ 0 & 0 & 0 & 0 & 0 & 0.54 & 0 & 0 & 0 & 0 & 0 \\ 0 & 0 & 0 & 0 & 0.43 & 0 & 0 & 0 & 0 & 0 & 0 \\ 0 & 0 & 0 & 0 & 0 & 0.74 & 0 & 0 & 0 & 0 & 0 \\ 0 & 0 & 0 & 0 & 0.44 & 0.67 & 0 & 0 & 0 & 0 & 0\end{matrix}\right]$

At step 308 the optimisation problem is sent to a quantum computer. In this example, the experiment was run on a quantum computer from D-Wave Systems, Inc. with parameters c = 256, which controls the number of decimal places, and α = 0.9 which controls the optimization problem preventing overfitting (getting the same original matrix). The solution to the problem obtained at step 310 is: $\left[\begin{matrix}0.0 & 0.0355 & 0.0106 & - 0.0035 & 0.0 & - 0.0710 & - 0.0284 & 0.0106 & - 0.0604 & - 0.1137 \\ & 0.0060 & 0.0 & - 0.0020 & 0.0 & - 0.0406 & - 0.0162 & 0.0060 & - 0.0345 & - 0.0650 \\ & & 0.0 & 0.0175 & - 0.0849 & 0.0 & 0.0146 & - 0.0703 & 0.0849 & 0.1289 \\ & & & 0.0 & - 0.0962 & 0.0 & 0.0166 & - 0.0796 & 0.0962 & 0.1460 \\ & & & & 0.0 & - 0.0662 & 0.0 & - 0.1290 & 0.0 & 0.2734 \\ & & & & & 0.0 & - 0.1755 & 0.0 & 0.2201 & 0.0 \\ & & & & & & 0.0 & 0.0104 & - 0.0591 & - 0.1112 \\ & & & & & & & 0.0 & 0.0611 & 0.0928 \\ & & & & & & & & 0.0 & - 0.0537 \\ & & & & & & & & & 0.0\end{matrix}\right]$

At step 312 new links are identified between the nodes. For example, the best new connection with a score of 0.2734 in the matrix above connects merchant M1 and product P4, which were not originally connected in representation 600/adjacency matrix *A*. The worst case with the highest negative number -0.1755 connects merchant M2 and product P1, which means they are highly uncorrelated.

At step 314 a recommendation is generated (e.g. merchant M1 should stock product P4) and at step 316 the recommendation is sent to e.g. a user device or server associated with merchant M1.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for identifying one or more new links between entities and generating one or more recommendations based on the identified one or more new links, the method comprising:
receiving, at a classical computer, a representation of a real-world network, wherein the representation of the real-world network comprises a plurality of nodes connected via one or more links, wherein each node represents a real-world entity and wherein each link has an initial weight;
defining, by the classical computer, an optimisation problem based on the representation of the network, wherein the optimisation problem is subject to one or more constraints;
submitting, by the classical computer, the optimisation problem to a quantum computer such that the quantum computer is able to solve the optimisation problem;
obtaining, by the classical computer from the quantum computer, a solution to the optimisation problem, wherein the solution comprises one or more updated weights;
identifying, by the classical computer, one or more new links between the nodes based on the one or more updated weights; and
generating, by the classical computer, one or more recommendations based on the one or more new links.

2. The method of claim 1, wherein the quantum computer is a quantum annealer and wherein the method further comprises:
solving, by the quantum computer, the optimisation problem.

3. The method of claim 1 or claim 2, wherein defining the optimisation problem comprises:
generating, by the classical computer, an adjacency matrix;
formulating, by the classical computer, an objective optimisation problem based on the adjacency matrix; and
converting, by the classical computer, the objective optimisation problem into a QUBO formulation.

4. The method of claim 3, wherein defining the optimisation problem comprises:
translating, by the classical computer, binary variables of the QUBO formulation into continuous variables.

5. The method of claim 3 or claim 4, wherein defining the optimisation problem comprises:
adding, by the classical computer, one or more constraints to the optimisation problem.

6. The method of any preceding claim, wherein the one or more constraints include one or more of:
network structure constraints;
link prevention constraints;
link quantity constraints; and
exclusivity constraints.

7. The method of any preceding claim, wherein the real-world network is a tripartite network.

8. The method of any preceding claim, wherein each node represents a cardholder, a merchant or an offer.

9. The method of claim 8, wherein the representation of the real-world network comprises at least one cardholder node, at least one merchant node and at least one offer node.

10. The method of claim 9, wherein each cardholder node is connected to at least one merchant node via a propensity link, and wherein each merchant node is connected to at least one offer node via a value link.

11. The method of any preceding claim, wherein the method further comprises:
sending, by the classical computer, the one or more recommendations to a user device or server associated with at least one cardholder and/or at least one merchant.

12. A system for identifying one or more new links between entities, the system comprising:
a classical computer configured for carrying out the method of any preceding claim.

13. The system of claim 12, wherein the system further comprises:
a quantum computer configured for solving the optimisation problem.

14. The system of claim 13, wherein the quantum computer is an adiabatic quantum computer.
